## Europäisches Patentamt

## European Patent Office

## Office européen des brevets

(11) Publication number: **0 129 005**
**B1**

(12) **EUROPEAN PATENT SPECIFICATION**

(45) Date of publication of patent specification: **04.04.90**

(51) Int. Cl.⁵: **B 41 J 25/24,** G 06 F 15/20

(21) Application number: **84103510.8**

(22) Date of filing: **30.03.84**

(54) **Interactive display terminal including an impact printer with interchangeable typing elements of different pitches.**

(30) Priority: **16.06.83 US 505132**

(43) Date of publication of application:
**27.12.84 Bulletin 84/52**

(45) Publication of the grant of the patent:
**04.04.90 Bulletin 90/14**

(84) Designated Contracting States:
**DE FR GB IT**

(56) References cited:
**US-A-3 630 336
US-A-3 780 846
US-A-3 892 303
US-A-4 074 798
US-A-4 181 444
US-A-4 217 055
US-A-4 281 938
US-A-4 397 572**

(73) Proprietor: **International Business Machines
Corporation
Old Orchard Road
Armonk, N.Y. 10504 (US)**

(72) Inventor: **Barnes, Johnny Gennie
11001 Bitteroot Circle
Austin Texas 78750 (US)**
Inventor: **Gaudet, James Louis
1500 Creek Hollow
Austin Texas 78754 (US)**
Inventor: **Hurley, Patrick James
2809 South Ocean Blvd.
Delray Beach Florida 33444 (US)**
Inventor: **Neuman, Grover Herbert
12317 Danny Drive
Austin Texas 78759 (US)**

(74) Representative: **Bonin, Jean-Jacques
Compagnie IBM France Département de
Propriété Intellectuelle
F-06610 La Gaude (FR)**

Courier Press, Leamington Spa, England.

## Description

The present invention relates to printing systems and particularly to printing systems which are compatible with interactive display terminals to provide word processing systems.

Word or text processing systems having interactive display terminals permitting an operator to extensively edit and format alphanumeric data which is, in turn, printed out on an associated printer have been in ever increasing demand in the office products and systems field. A goal of all word processing systems is to facilitate the preparation of such formatted correspondence and other documents by the systems operator. To this end, the industry has been attempting to make the processor as "friendly" and unconfusing to the operator as possible. This of course entails minimizing the operator steps necessary to produce a document and particularly minimizing constraints upon the operator.

Most current word processing systems utilize impact printers having a removable type or character font element mounted upon a carrier which is movable along horizontal lines in the document to be printed in the printer. This removable type font element may be of the ball type used throughout the industry or of the daisy wheel type having a plurality of character petals as described with respect to the printer in US—A—4,178,108. It is very often the case that in preparing a document, a plurality of type font elements have to be used. Since there are in the order of from 90 to 100 characters on a font, it is readily seen that changes of the type font element may be required even in the formation of a straightforward piece of correspondence. Portions of the document may require fonts with bold face type, other portions of the document italics fonts and still others symbol fonts to be used in equations.

In conventional practice, where a plurality of fonts have to be used to produce a given document, fonts are changed when a line or a paragraph is completed. This change is accomplished either by a message on an interactive display screen indicating to the operator that the operation of the printer has been inhibited until the operator manually changes from a given font to another selected font. At this point, the printing can be continued. On the other hand, the change of font may be accomplished through the expedient of an automatic font changer associated with the printer, U.S. Patent 4,307,968 gives the details of such an automatic font changer associated with a print wheel type of printer. In the case of such an automatic font changer operation, no operator intervention is necessary; the printer automatically changes fonts in an operation which is transparent to the operator.

While there are available print systems which permit changes in font between successive lines as illustrated by US—A—4 281 938 or which permit changes in font in the course of a single line as illustrated by US—A—3 892 303, we are not aware of any prior art disclosing means which provide for changes in font in the course of a single line when such changes in font result in a change in the pitch of characters printed along this single line. The result is an additional constraint on the operator. In many existing printing systems, formatting selections made by the operator which will result in changes in font during a course of printing a single line are not permitted. In this manner, the system and consequently the operator need not be concerned with whether such changes in fonts produce pitch changes. The prior art has apparently not developed means providing the capability of handling pitch changes which occur in a single line, i.e., printing on the same line with fonts of different pitch. Thus, with the existing equipment, the operator is bound by the constraint of changing to a font of the same pitch. This presents significant constraints on the operator as well as being a more costly system. For example, suppose that an operator wished to italicize a portion of a single line. Since the regular portion of the line could conceivably be printed with a font having one of three possible pitches, i.e., 10 pitch, 12 pitch and 15 pitch, the printer would then have to inventory italics fonts of 10, 12 and 15 pitch. This would appear to be unnecessarily costly for the equipment to inventory three different font elements for rarely used italics printing.

The printer system of the present invention, provides for the use of different font elements of different pitch in the same line to thereby eliminate the operator constraint limitation as well as the potential costly font element inventories required of systems which cannot accept the use of fonts of different pitch to print a single line.

The present invention relates to an interactive display terminal including an impact printer with interchangeable typing elements bearing type fonts of different pitches, carrier means for receiving a selected one of said typing elements, means for moving said carrier linearly across the document being printed on, means for selecting characters in a received typing element to be printed at a respective linear position, means for impacting said selected character upon said document at said position to form printed lines, and means for controlling the selection of typing elements and type fonts to provide a selected document format, characterized in that said controlling means includes means for controlling printing with at least two font elements of different pitch along a single line, said printing controlling means further including means for receiving format data including a specified pitch value and character data including the selected characters for impacting, pitch register means for storing the specified pitch value, means for providing said character data and said pitch value in said pitch register means to said impacting means, and test means for determining when said format data includes a change in pitch value and for stopping said character data and said pitch value from said pitch register means from being provided to the impacting means until the test means has stored said changed pitch value in said pitch register means.

Referring now to the drawings, wherein a preferred embodiment of the invention is illustrated, and wherein like reference numerals are used throughout to designate like parts;

Fig. 1 is a logical block diagram showing the apparatus of the present invention in generalized form.

Fig. 2 is a logical block diagram showing the apparatus, particularly in the memory portion of Fig. 1 in greater detail so that the steps involved in the present invention may be understood.

Fig. 3 is a logical block diagram showing a portion of the printer line processor logic of Fig. 2 in greater detail.

Fig. 4 is a flow chart of the operation involved in the line state decoder of Fig. 3 in order to determine which pass of five possible passes may be available to print the line that the apparatus is currently printing.

Figs. 5—9 are flow charts respectively describing the operations on each of the five possible passes to print a line: superscript, base line, overstrike, underscore and subscript passes.

Fig. 10 is a flow chart of the operations involved in the pitch test routine used to determine pitch.

Fig. 11 is a flow chart of the operations involved in moving a character in the printer.

Fig. 12 is a flow chart of the operations involved at the start of a line.

Fig. 13 is a flow chart of the operations involved at the end of a line.

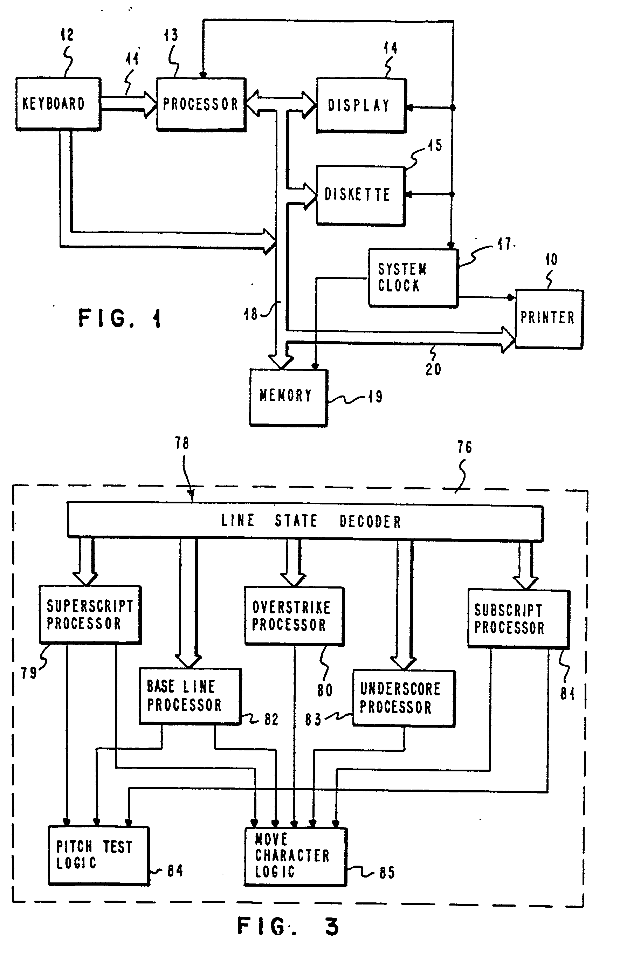

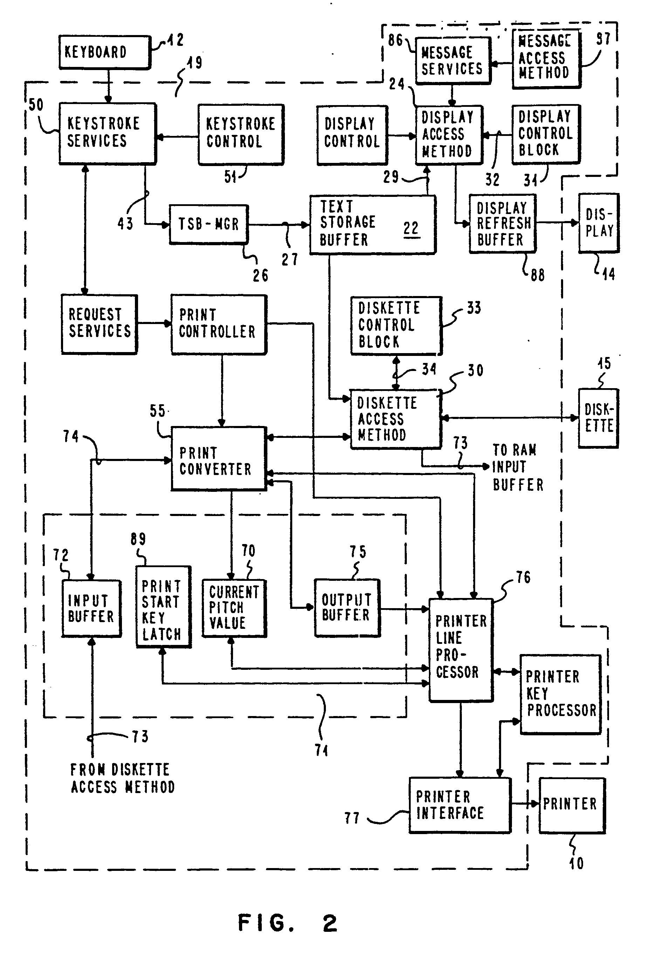

With reference to Fig. 1, a generated view of the apparatus which may be used to carry out the present invention is shown. While the present invention may be carried out on a key-to-print type of printer wherein the document is printed in direct response to operator entry at the keyboard, it is preferred that the present printer system be part of a display word processing system. The apparatus for carrying out this invention may be any conventional word or text processing system such as that described in EP—A—0067288. In order to carry out the present invention, attached to the text processing system is a conventional printer 10 which may be any printer such as a daisy wheel printer which prints the alphanumeric text on the document to be produced character by character, i.e., in response to the coded representation of the next character to be printed in a particular data stream applied to the printer, a character is selected from the daisy wheel font. A typical print wheel or daisy wheel printer which may be used in accordance with the present invention is described in U.S. Patent 4,189,246.

In performing the operations to be subsequently described, the operator accesses the word processor through a keyboard 12. The keyboard drives an internal microprocessor 13 which is operably connected to the display terminal 14 as well as to diskette storage means 15. The keyboard is further connected to random access memory 19 through memory bus 18. A system clock 17 is provided for timing functions within the word processing system. Printer 10 is communicated with over bus 20. Memory 19 provides means for storing data within the word processing system and also provides the programs for controlling printer 10 to print data and to provide the operator interface through display 14.

Fig. 2 shows the elements of memory 19 pertinent to the present embodiment and particularly the functional programs which relate to the printing of lines of characters in an operation involving several passes per printed line as will be hereinafter described in greater detail. This printing system will support changes in pitch within a single line. With respect to the pertinant logic operation program for controlling the general operations of the functional areas of memory shown in Fig. 2, the operator interfaces with the display through keyboard 12 involving standard keyboard entry steps. As the operator enters each key stroke at the keyboard 12, a corresponding signal is transmitted through channel 11 to processor 13 which enters the key stroke command into the memory 19 (Fig. 1). In the memory, upon the receipt of a key stroke command, a key stroke routine is produced for key stroke service routine block 50 (Fig. 2) to handle the particular command received. This is carried out under the control of the key stroke control block 51. The key stroke command is then processed via channel 43 to the text buffer storage manager block (TSB MGR) 26 which has been programmed to control various processes with respect to the data stored in the text storage buffer 22. The handling and updating of data stored in the text storage buffer 22 is controlled by routines stored within the text storage buffer manager (TSB) 26. Display access method program 24 controls the formatting of alphanumeric text representative of the data stored in the text storage buffer on visual display terminal 14 through display refresh buffer 25. It should be noted that the display refresh buffer 25 may operate in any conventional manner. However, in the present example, a "BUILD" subroutine is used which is described in EP—A—0052723.

Text storage buffer (TSB) manager block 26 is connected to text storage buffer 22 by line 27. Data representative of the alphanumeric text characters is input buffer 22. The data representative of characters is stored sequentially in text storage buffer 22 in the order in which it is received, in displaying the characters text character data stored in buffer 22 is communicated to display access method 24 over channel 29. It should be noted that corresponding diskette access method block 30 is used instead of access method block 24 when communication between the text storage buffer 22 and the diskette 15 is desired. A display control block 31 is connected through a channel 32 with display access method block 24. The corresponding diskette control block 33 communicates with diskette access method 30 over channel 34 when access to the diskette drive is required.

The printer system in the present invention includes print converter 55 which serves as an interface between the data stream of the alphanumeric data to be printed which is stored on diskette 15 and printer 10. The primary function of the converter is to convert the data stream internal to the word processing system as stored on diskette 15 and to access through diskette access method 30 a printable data stream. The printer system has a supporting random access memory 71 which contains an input buffer 72. This input buffer receives the data stream stored on diskette 15 through diskette access method 30 via channal 73. Converter 55 takes the data from input buffer 72 via channel 74 and provide the revised or print level data stream to output buffer 75 of RAM 71. This revised or print level data stream which includes codes representative of font changes (which may or may not involve pitch changes) is accessed from output buffer 75 by printer line processor unit 76 which will be described in greater detail hereinafter with respect to Fig. 3. The processed data stream then proceeds through printer interface 77 to printer 10.

Using the apparatus and standard logic described hereinabove with respect to Figs. 1 and 2 as well as the logic of Fig. 3 and the programming functions to be hereinafter described, the operation of the present invention will now be described in the steps set forth in the flow charts of Fig. 4—13. At this point, let us assume that the operator at keyboard 12 working with display 14 in a word processing system of the type described above has formatted the document to be printed and that formatted document is currently stored on a diskette 15. In order to commence printing, the operator initiates the printing operation and the data stream representative of the document to be printed is accessed through display access method 30 (Fig. 2) to input buffer 72 of RAM 71. The data stream then will proceed as previously described through print converter 55 to output buffer 75 of RAM 71 and then onto printer line processor 76 which will be involved in most of the operational steps to be described with respect to Figs. 4—15. Let us further assume that in formatting the document to be printed, the operator has had the occasion to use a plurality of print wheels and consequently has indicated print wheel changes which have become encoded into the data stream; some of these print wheel changes will involve a change in pitch and particularly a change in pitch which occurs during the printing of a line rather than at the end of a line.

Referring first to the flow chart of Fig. 12, under the direction of print line processor 76, at the start of every line, step 101, current pitch value in register 70, RAM 71 in Fig. 2 is reset to start of line pitch value, step 102; also, step 103, the pointer in RAM 71 output buffer 75, Fig. 2 is reset to "start of current line", and the start line routine is then completed.

In our illustrative example, we are dealing with an operation wherein each line is formed by up to five passes. The first pass involving the printing of superscript if any is possible. Of course, if no superscript is possible, this pass is unnecessary. The second pass is referred to as the base pass. This is the pass when the actual alphanumeric characters are printed. A third pass is provided for overstriking if any overstriking is present in the line. A fourth pass is provided for underlining where present. And a fifth pass is provided for subscript where present. The determination of how many of these passes is to be carried out is made in printer line processor 76 and particularly in the line state decoder shown in Fig. 3.

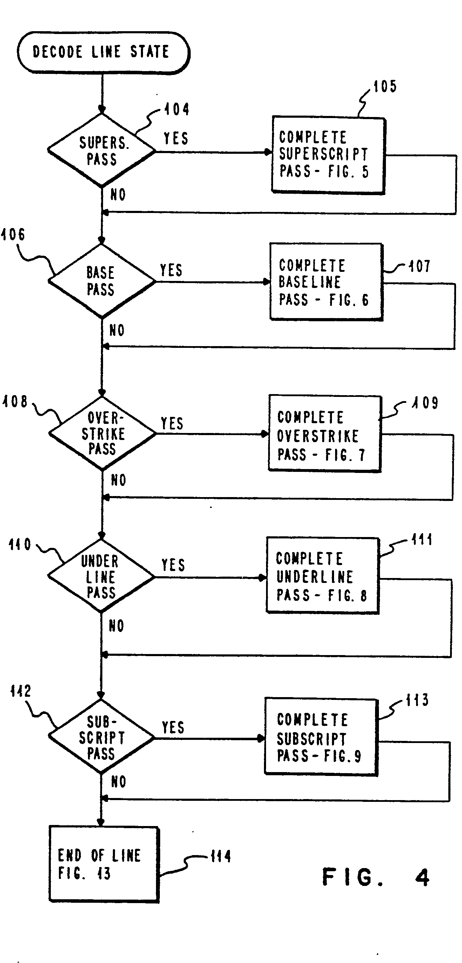

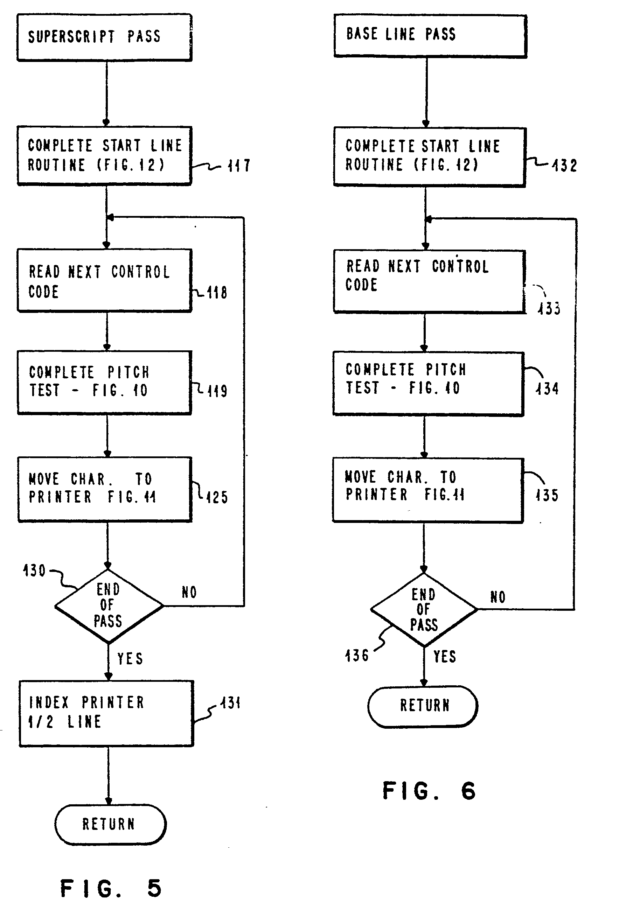

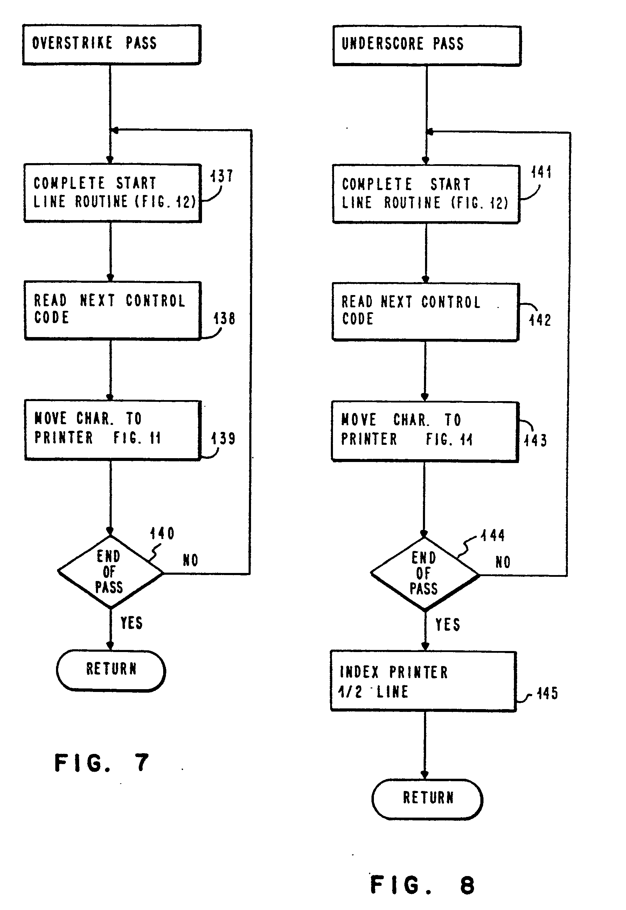

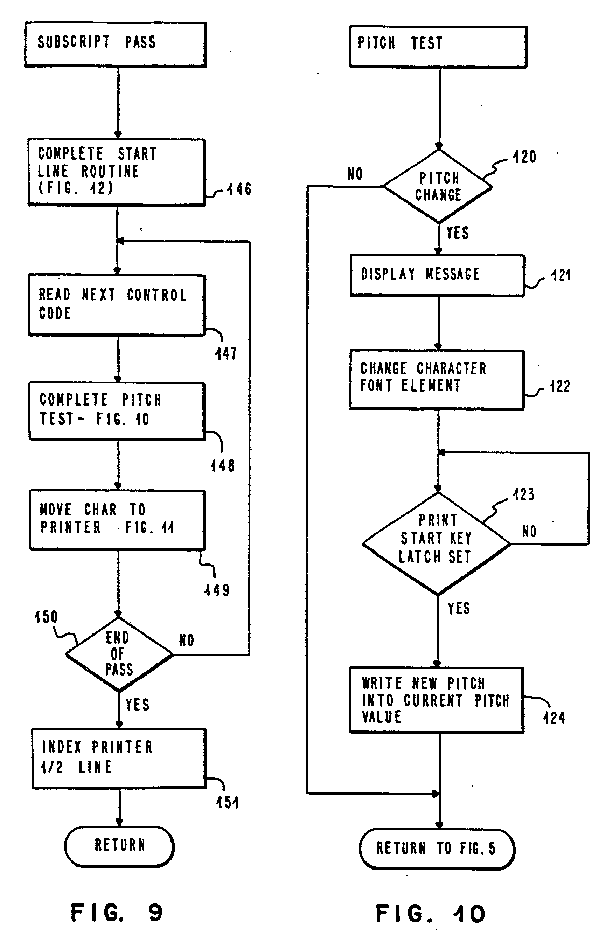

The decisions made in the line state decoder 78 of Fig. 3 are made in accordance with the operation to be now described with respect to the flow chart of Fig. 4. First, step 104, a determination is made as to whether there is any superscript to be printed and consequently a superscript pass required. If a superscript pass is required, the process then goes to step 105, the operation will be subsequently described with respect to Fig. 5 necessary to complete a superscript pass of if the superscript pass is completed, the operation proceeds to decision step 106 wherein the determination is made as to whether a base pass is required. Since the base or base line pass is the pass in which the alphanumeric characters are printed, the base line pass is very likely to be required. The process will then proceed to the operations necessary to complete a base line pass, step 107, as set forth in detail in Fig. 6 to be subsequently described. Here again upon the completion of the base line pass or if no base line pass is required, the operation proceeds to decision step 108 where a determination is made as to whether there are any overstrikes requiring an overstrike pass. If an overstrike pass is required, the process branches, step 109, to the overstrike pass operations described in Fig. 7. Upon the completion of these operations or if no overstrike pass is required, the process proceeds to decision step 110 where a determination is made as to whether there is any underlining requiring an underline pass. If such an underline pass is required, the process then, step 111, goes to the underline pass procedure to be subsequently described with respect to Fig. 8. Upon the completion of the underline pass procedure or if such a procedure is not required, the process then goes to decision step 112 where a determination is made as to whether there is any subscript requirement or pass. If, such a pass is required, then the procedure, step 113, goes to the routine subsequently to be described with respect to Fig. 9 of completing a subscript pass. Upon the completion of such a subscript pass or if no such subscript pass is completed, the operations for the particular line have been completed.

At this point, a plurality of passes, five or less, required to print the particular line being printer are now completed, and the operation, step 114, proceeds to the end of line routine shown in Fig. 13. In the end of line routine, step 115, RAM output buffer 75 (Fig. 2) is set equal to the beginning of the next line. Then, step 116, a start line pitch value is set equal to the current pitch value in current pitch value register 70. The end of line routine is thus completed and the operation is returned.

We will now proceed to describe the operations taking place in each of the five possible passes. First, if a superscript pass is required, operations described in the flow chart of Fig. 5 are carried out under the control of the superscript processor 79 in Fig. 3. First, on this pass and on everyone of the subsequent four passes, the start line routine of Fig. 12 is carried out, step 117. The significance of this step is that irrespective of whatever change may have taken place on a previous one of the five passes in a given line formation, the pitch of the next pass is always set back at its original "start of line" value. Then, the next control code, step 118 is read from output buffer 75 (Fig. 2) by the superscript processor 79 (Fig. 3) of printer line processor 76 (Fig. 2). By control code, we mean the code indicating formatting information as distinguished from a character code indicative of the characters to be printed which will succeed the control code.

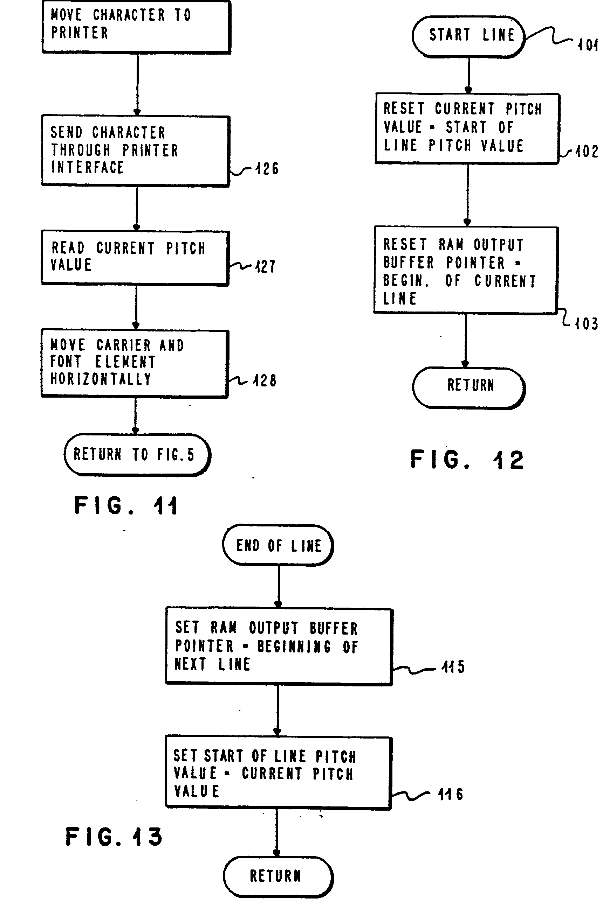

At this point, the pitch test is completed, step 119, following the operations set forth in Fig. 10; these operations are carried out under the control of the pitch test logic (Fig. 3) in the printer line processor 76 (Fig. 2). First, decision step 120 (Fig. 10), a determination is made as to whether control codes indicate a pitch change. If there is no pitch change, the process is returned to the superscript pass operation of Fig. 5. If there is a pitch change, then, in the present embodiment a message indicative of such a change is displayed to the operator step 121. This is carried out by pitch test logic 84 (Fig. 3) accessing the display message services logic 86 (Fig. 2) through the message access method 87. The message services communicate through the display access method 24 and display refresh buffer 88 to display 14 in Fig. 2 to display the message in the conventional manner. The message to the operator indicates that the operator should change the character font element on the printer to the element containing character font having the pitch change. The operator then proceeds, step 122, to change the character font element. In the mean time, the operation awaits an indication, decision step 123 (Fig. 10), that the start key latch has been set. The setting of the start key latch indicates the requested change in the character font element has been completed and that printing may resume. The status of the start key latch is maintianed in print start key latch register 89 (Fig. 2). When a determination is made in step 123 that start key latch has been set, a new pitch is written into the current pitch value register 70 (Fig. 2), step 124.

At this point, the operation is returned to the operations of Fig. 5 and the next character is moved to the printer so that it may be printed, step 125 (Fig. 5). The "move character to printer" procedure of step 125 (Fig. 5) is described in detail with reference to Fig. 11. The character is sent, step 126, through the printer interface 77 while, step 127, the current pitch value in register 70 is read. In response to this pitch value, the carrier on the printer together with the character font element is moved horizontally for a distance reflective of this pitch value so that the character may be printed at the appropriate horizontal position along the print line during this pass. At this point the operation is returned to the procedure of Fig. 5 where a determination is made, decision step 130, as to whether the pass it at an end. If it is not, then the operation is returned to step 118 and the next control code read. If we are at the end of the superscript pass, then, the printer is indexed one-half line, step 131, and the superscript pass is completed.

The next pass is the base line pass which is carried out under the control of the base line processor 82 (Fig. 3) of the printer line processor 76. The operations of the base line pass which are shown in Fig. 6 are substantially the same as those in the subscript pass except that in this second pass, the alphanumeric characters which make up the primary composition of the line are printed. Steps 132—136 of the operation of Fig. 6 are respectively the same as steps 117, 118, 119, 125 and 130 of the operations in Fig. 5. The only difference is that at the end of the base line pass in Fig. 6, the printer is not indexed.

Next, the third or overstrike pass shown in the flow chart of Fig. 7 is carried out under the control of the overstrike processor 80 (Fig. 3). This overstrike pass is substantially the same as the base line pass of Fig. 6 with step 137 being the same as step 132, 138 the same as step 133, step 139 the same as 135 and step 140 the same as step 136. The only difference in these procedures in that no pitch test is carried out. We have indicated hereinabove that there is no change of pitch during an overstrike, i.e., the overstrike has only a single pitch irrespective of the pitch or changes in pitch of the base line characters being overstruck.

Upon the completion of the overstrike pass, the operations involved in the underscore pass as set forth in flow chart of Fig. 8 are carried out under the control of the underscore processor 83 (Fig. 3). This underscore pass has substantially the same steps as the overstrike pass of Fig. 7, with step 141 being the equivalent of step 137, 142 the equivalent of step 136, 143 the equivalent of step 139, and step 144 the equivalent of step 140. The only difference between the operations in Fig. 7 and Fig. 8 is that at the end of the underscore pass in Fig. 8, the printer is indexed one-half line, step 145. Here again in the underscore pass, no pitch test is necessary. As stated hereinabove, the underscore is of a single pitch carried out with overlapping characters so as to make a continuous underscore line unaffected by variations in the pitch of the characters being underscored or underlined.

The final or subscript pass, the operations of which are shown in Fig. 9 is carried out under the control of the subscript processor 81 (Fig. 3). The steps of this subscript pass of Fig. 9 are substantially the same as the steps in the superscript pass previously described with respect to Fig. 5; step 146 is the equivalent of step 117, step 147 is the equivalent to step 118, step 148 is the equivalent to step 119, step 149 is the equivalent to step 125, step 150 is the equivalent to step 130 and step 151 is the equivalent to step 131.

Upon the completion of the subscript pass, the operation is returned to step 114 of Fig. 4 and the end of the routine previously described with respect to Fig. 13 is carried out.

While the invention has been particularly shown and described with reference to a preferred embodiment it will be understood by those skilled in the art that various other changes in form and detail may be made without departing from the scope of the invention as defined in the claims.

**Claims**

1. Interactive display terminal including an impact printer (10) with interchangeable typing elements bearing type fonts of different pitches, carrier means for receiving a selected one of said typing elements, means for moving said carrier linearly across the document being printed on, means for selecting characters in a received typing element to be printed at a respective linear position, means for impacting said selected character upon said document at said position to form printed lines, and means (13) for controlling the selection of typing elements and type fonts to provide a selected document format, characterized in that said controlling means (13) includes means for controlling printing with at least two font elements of different pitch along a single line, said printing controlling means further including means for receiving format data including a specified pitch value and character data including the selected characters for impacting, pitch register means (70) for storing the specified pitch value, means for providing said character data and said pitch value in said pitch register means to said impacting means, and test means (84) for determining when said format data includes a change in pitch value and for stopping said character data and said pitch value from said pitch register means from being provided to the impacting means until the test means has stored said changed pitch value in said pitch register means.

2. Terminal according to claim 1 wherein said controlling means includes multiple pass means (76) for causing the impacting means to impact said selected characters on a line in multiple passes.

3. Terminal according to claim 2 wherein said multiple pass means includes means for having the selected characters to be impacted on each pass with a font element of different character font pitch from a font element of a previous pass.

4. Terminal according to claim 3 wherein said multiple pass means further includes means for having said characters impacted along a single pass with at least two font elements of different character font pitch.

5. Terminal according to any one of the preceding claims, wherein said printer includes means (83) for printing underlines beneath selected characters on a different pass from the pass for printing said selected characters, and said underlines being printed by impacting a line character in a sequence of overlapping positions.

6. Terminal according to any one of the preceding claims, wherein said printing system includes means (80) for overstriking a sequence of underlying selected characters on a selected line, said overstriking being printed by impacting an overstrike character in a sequence of positions over said selected underlying characters and said overstrike characters being printed in a single pitch whereby said overstrike characters are not in coincidence with underlying characters printed in a different pitch.

7. Terminal according to any one of the preceding claims wherein said controlling means further includes means for displaying on said terminal a message indicating to the operator that a change from one said two font elements to the other must be made.

**Patentansprüche**

1. Interaktives Anzeigeterminal mit einem Impaktdrucker (10) mit auswechselbaren Druckelementen, die Zeichensätze mit verschiedenen Abständen tragen, Trägermittel für die Aufnahme eines der besagten Druckelemente, Mittel für die Bewegung des besagten Trägers linear über das gerade zu druckende Dokument, Mittel zum Auswählen von Zeichen in einem aufgenommenen Druckelement um in einer bestimmten linearen Position gedruckt zu werden, Mittel zum Anschlagen des ausgewählten Zeichens auf das Dokument in der besagten Position, um Druckzeilen zu bilden, und Mittel (13) zum Überprüfen der Auswahl der Druckelemente und Schrifttypen, um ein ausgewähltes Dokumentenformat zu liefern, dadurch gekennzeichnet, daß besagtes Steuermittel (13) Mittel enthält, um den Druck mit mindestens zwei Druckelementen mit unterschiedlichem Zeichenabstand in einer einzigen Zeile zu steuern, wobei besagtes Drucksteuermittel auch Mittel enthält, um Formatdaten zu empfangen, einschließlich eines Wertes, der den Zeichenabstand spezifiziert, und Schriftzeichendaten, einschließlich der zum Anschlagen ausgewählten Zeichen, Abstandsspeichermittel (70) zum Speichern des spezifizierten Abstandswerts, Mittel, um die besagten Schriftzeichendaten und den besagten Abstandwert in besagten Abstandsregistermitteln für besagte Anschlagmittel bereitzustellen, und Testmittel (34) für die Ermittlung des Zeitpunkts, zu dem die besagten Formatdaten eines Änderung des Abstandswertes enthalten, und zum Anhalten der besagten Schriftzeichendaten und des besagten Abstandswertes aus besagtem Abstandsregistermittel, wobei die Weitergabe an die Anschlagmittel unterbrochen wird, bis das Testmittel den besagten geänderten Abstandswert in besagtem Abstandsregistermittel gespeichert hat.

2. Terminal gemäß Anspruch 1, in dem besagte Kontrollmittel Mittel für mehrfachen Durchgang (76) enthalten, um die Anschlagmittel zu veranlassen, besagte ausgewählte Zeichen in einer Zeile in mehreren Durchgängen anzuschlagen.

3. Terminal gemäß Anspruch 2, in dem besagte Mittel für mehrfachen Durchgang Mittel enthalten, um die ausgewählten Zeichen bei jedem Durchgang mit einem Zeichensatzelement mit unterschiedlichem Zeichenabstand von einem Zeichensatzelement des früheren Durchgangs auszudrucken.

4. Terminal gemäß Anspruch 3, in dem besagte Mittel für mehrfachen Durchgang Mittel enthalten, um besagte Zeichen in einem einzigen Durchgang zu drucken, mit mindestens zwei Zeichensatzelementen unterschiedlichen Abstands.

5. Terminal gemäß einem der vorangehenden Ansprüche, in dem besagter Drucker Mittel (83) enthält, um ausgewählte Zeichen in einem vom Durchgang zum Drucken der ausgewählten Zeichen getrennten Durchgang zu unterstreichen, und besagtes Unterstreichen durch Anschlagen eines Linienzeichens in Sequenz in sich überlappender Position erzielt wird.

6. Terminal gemäß einem der vorangehenden Ansprüche, in dem besagtes Drucksystem Mittel (80) enthält, um in einer ausgewählten Zeile eine Folge ausgewählter Zeichen mit anderen Zeichen zu überdecken, wobei ein Überdeckungszeichen in einer Folge von Positionen über besagten ausgewählten darunterliegenden Zeichen angeschlagen wird und besagte Überzeichen in einem einzigen Abstand gedruckt werden, so daß die Überdeckungszeichen nicht mit den in einem anderen Abstand gedruckten Zeichen zusammenfallen.

7. Terminal gemäß einem der vorangehenden Ansprüche, in dem besagte Steuermittel außerdem Mittel enthalten, um auf besagtem Terminal eine Meldung für den Bediener anzuzeigen, um ihn darauf hinzuweisen, daß ein Wechsel von einem der beiden Schriftzeichenelemente zum andern vorgenommen werden muß.

**Revendications**

1. Terminal d'affichage interactif comportant une imprimante à impact (10) à éléments d'impression interchangeables portant des polices de caractères à espacements différents, un chariot pour recevoir l'un desdits éléments d'impression choisi, des moyens pour déplacer ledit chariot linéairement sur le document faisant l'objet de l'impression, des moyens pour choisir des caractères dans un élément d'impression choisi afin de les imprimer à des positions linéaires respectives, des moyens pour imprimer par impact chacun desdits caractères choisis sur ledit document à ladite position de façon à former des lignes imprimées, et des moyens (13) pour commander le choix des éléments d'impression et des polices de caractères afin de définir un format choisi de document, caractérisé en ce que lesdits moyens de commande (13) comprennent des moyens pour commander l'impression avec au moins deux polices de caractères d'espacements différents le long d'une seule ligne, lesdits moyens de commande d'impression comprenant en outre des moyens pour recevoir des données de format comportant une valeur d'espacement spécifiée et des données de caractères comprenant les caractères choisie pour être imprimés par impact, un registre d'espacement (70) pour stocker la valeur d'espacement spécifiée, des moyens pour transmettre lesdites données de caractères et ladite valeur d'espacement contenue dans ledit registre d'espacement auxdits moyens d'impression par impact, et des moyens de test (84) pour déterminer si lesdites données de format comportent une valeur d'espacement modifiée et pour interdire la transmission desdites données de caractères et de ladite valeur d'espacement provenant dudit registre d'espacement aux moyens d'impression par impact jusqu'à ce que les moyens de test aient stocké ladite valeur d'espacement modifiée dans ledit registre d'espacement.

2. Terminal selon la revendication 1 dans lequel lesdits moyens de commande comprennent des moyens (76) d'impression par passes multiples pour provoquer la l'impression desdits caractères choisis sur une ligne par les moyens d'impression par impact par passes multiples.

3. Terminal selon la revendication 2 dans lequel lesdits moyens d'impression par passes multiples comprennent des moyens pour permettre l'impression par impact, à chaque passe, des caractères choisis, au moyen d'une police de caractères dont l'espacement diffère de celui des caractères de la police employée lors d'une passe précédente.

4. Terminal selon la revendication 3 dans lequel lesdits moyens d'impression par passes multiples comprennent en outre des moyens permettant l'impression par impact desdits caractères en une seule passe avec au moins deux polices de caractères ayant des espacements différents.

5. Terminal selon l'une quelconque des revendications précédentes dans lequel ladite imprimante comprend des moyens (83) pour imprimer des soulignements au-dessous de caractères choisis lors d'une passe différente de celle pendant laquelle lesdits caractères choisis ont été imprimés, lesdits soulignements étant obtenus en imprimant par impact un caractère de soulignement dans une suite de positions qui se chevauchent.

6. Terminal selon l'une quelconque des revendications précédentes dans lequel ledit système d'impression comprend des moyens (80) pour effectuer une surimpression au-dessus d'une suite de caractères choisis dans une ligne choisie, ladite surimpression étant réalisée en imprimant par impact un caractère dans une suite de positions au-dessus desdits caractères choisis, et ce avec un seul respectivement, si bien que les caractères en surimpression ne coïncident pas avec les caractères sous-jacents imprimés avec un espacement différent.

7. Terminal selon l'une quelconque des revendications précédentes dans lequel lesdits moyens de commande comprennent en outre des moyens pour afficher sur ledit terminal un message informant l'opérateur qu'il est nécessaire de passer d'une desdites polices de caractères à l'autre.

EP 0 129 005 B1

FIG. 1

FIG. 3

FIG. 2

FIG. 4

FIG. 5

FIG. 6

FIG. 7

FIG. 8

FIG. 9

```
┌──────────────────────┐
│   SUBSCRIPT  PASS     │
└──────────┬───────────┘
           │
           ▼
┌──────────────────────┐
│  COMPLETE  START     │
│  LINE  ROUTINE       │── 146
│  (FIG. 12)           │
└──────────┬───────────┘
           │◄─────────────────┐
           ▼                  │
┌──────────────────────┐      │
│  READ  NEXT  CONTROL │      │
│  CODE                │      │
└──────────┬───────────┘      │
         147                  │
           ▼                  │
┌──────────────────────┐      │
│  COMPLETE  PITCH     │      │
│  TEST-  FIG. 10      │      │
└──────────┬───────────┘      │
         148                  │
           ▼                  │
┌──────────────────────┐      │
│  MOVE  CHAR  TO      │      │
│  PRINTER  ·FIG. 11   │      │
└──────────┬───────────┘      │
         149                  │
           ▼                  │
    150  ╱╲                   │
       ╱    ╲    NO           │
      ╱  END   ╲──────────────┘
      ╲  OF    ╱
       ╲ PASS ╱
         ╲  ╱
          ╲╱
         │ YES
         ▼
┌──────────────────────┐
│  INDEX  PRINTER      │
│  1/2  LINE           │── 151
└──────────┬───────────┘
           │
           ▼
     ╭──────────╮
     │  RETURN  │
     ╰──────────╯
```

**FIG. 9**

FIG. 10

```
┌──────────────────────┐
│   PITCH  TEST        │
└──────────┬───────────┘
           │
   NO      ▼       120
 ┌────────╱╲
 │      ╱    ╲
 │     ╱ PITCH ╲
 │     ╲ CHANGE╱
 │      ╲    ╱
 │        ╲╱
 │       │ YES
 │       ▼
 │ ┌──────────────────────┐
 │ │  DISPLAY  MESSAGE    │── 121
 │ └──────────┬───────────┘
 │            │
 │            ▼
 │ ┌──────────────────────┐
 │ │  CHANGE  CHARACTER   │── 122
 │ │  FONT  ELEMENT       │
 │ └──────────┬───────────┘
 │            │◄─────────────────┐
 │            ▼      123          │
 │        ╱╲                      │
 │      ╱    ╲                    │
 │     ╱ PRINT ╲     NO           │
 │     ╲START KEY╱────────────────┘
 │     ╱LATCH SET╲
 │      ╲      ╱
 │        ╲  ╱
 │          ╲╱
 │         │ YES
 │         ▼
 │ ┌──────────────────────┐
 │ │  WRITE  NEW  PITCH   │
 │ │  INTO  CURRENT  PITCH│── 124
 │ │  VALUE               │
 │ └──────────┬───────────┘
 │            │
 └────────────┤
              ▼
     ╭──────────────────╮
     │  RETURN  TO FIG. 5│
     ╰──────────────────╯
```

**FIG. 10**

MOVE CHARACTER TO
PRINTER

SEND CHARACTER
THROUGH PRINTER
INTERFACE                    126

READ CURRENT PITCH
VALUE                        127

MOVE CARRIER AND
FONT ELEMENT
HORIZONTALLY                 128

RETURN TO FIG.5

FIG. 11

START LINE            104

RESET CURRENT PITCH
VALUE = START OF
LINE PITCH VALUE            102

RESET RAM OUTPUT
BUFFER POINTER =
BEGIN. OF CURRENT
LINE                        103

RETURN

FIG. 12

END OF LINE

SET RAM OUTPUT BUFFER
POINTER = BEGINNING OF
NEXT LINE                    115

SET START OF LINE PITCH
VALUE = CURRENT PITCH
VALUE                        116

FIG. 13

RETURN